# EUROPEAN PATENT APPLICATION

(11) **EP 4 667 227 A1**
(43) Date of publication of application: **24.12.2025**
(21) Application number: 25182699.6
(22) Date of filing: 13.06.2025
(51) Int. Cl.: B41J 2/21, H04N 1/60

(54) **DENSITY ADJUSTMENT METHOD IN INKJET PRINTING DEVICE**

(30) Priority: 17.06.2024 JP 2024097205
(71) Applicant: SCREEN Holdings Co., Ltd., Kyoto-shi, Kyoto 602-8585 (JP)
(72) Inventor: OKUDA, Kuniharu, Kyoto, 602-8585 (JP); KIMURA, Keisuke, Kyoto, 602-8585 (JP)
(74) Representative: Kilian Kilian & Partner mbB

(57) **Abstract**

A color ink density correction value table representing a correspondence relationship between color ink density signal values and densities to be appeared by ejecting color ink on a base material is created (S100). A plurality of primer density correction value tables each representing a correspondence relationship between primer density signal values and densities to be appeared by ejecting the color ink on the primer is created (S110). A color ink density correction value is obtained based on the density of a first color image formed only with the color ink with reference to the color ink density correction value table (S140). A primer density correction value is obtained based on the density of a second color image formed with the primer and the color ink with reference to the primer density correction value table corresponding to the density of the color ink (S180).

## Description

### BACKGROUND OF THE INVENTION

### Field of the Invention

The present invention relates to a density adjustment method for adjusting the density of an image formed by printing a color ink on a processing liquid such as primer in an inkjet printing device that applies the processing liquid to a base material (printing medium) before printing using the color ink.

### Description of Related Art

An inkjet printing device that performs printing by ejecting ink onto a base material as a printing medium such as a printing paper or a film is widely known. Regarding such an inkjet printing device, nozzles provided in an ejection head that ejects ink have individual differences. Thus, even when ink is ejected from a large number of nozzles provided in the ejection head based on the same drive signal, the amount of ink ejected from the large number of nozzles varies. When printing is executed in such a state, a high-quality printed matter cannot be obtained. Thus, shading correction processing for compensating for variations in the ejection amount of ink among the plurality of nozzles is performed.

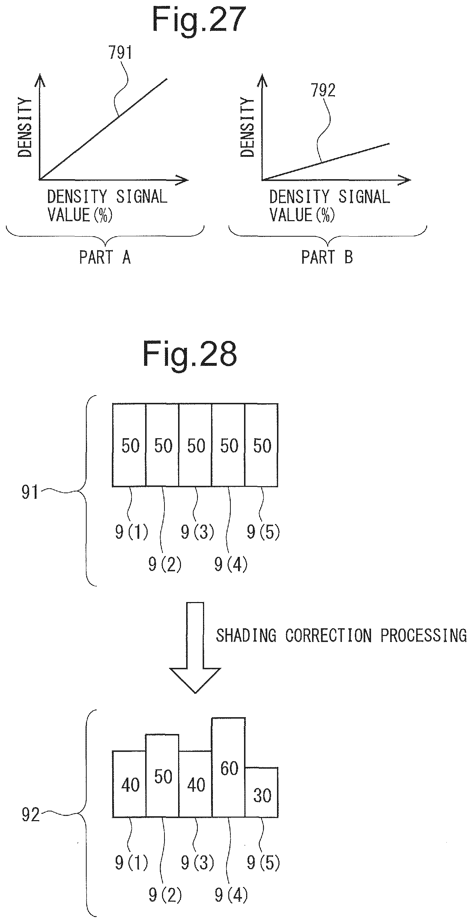

An overview of the shading correction processing will be described with reference to Fig. 28. Here, take notice of five pixel portions 9(1) to 9(5) corresponding to five nozzles. It is assumed that, in the five pixel portions 9(1) to 9(5), single-color printing is performed with ink of the same color to be ejected from the five nozzles. Regarding Fig. 28, the numerical values inside the rectangles corresponding to the respective pixel portions 9(1) to 9(5) represent density signal values (density values in print data). It is assumed that when printing of a constant density (50%) is performed without executing the shading correction processing, ink of (5/4) times the amount of the pixel portion 9(2) is ejected to the pixel portion 9(1) and the pixel portion 9(3), ink of (5/6) times the amount of the pixel portion 9(2) is ejected to the pixel portion 9(4), and ink of (5/3) times the amount of the pixel portion 9(2) is ejected to the pixel portion 9(5). In this case, the density signal values indicated by the portion denoted by reference numeral 91 are corrected to the density signal values indicated by the portion denoted by reference numeral 92 by the shading correction processing. For example, since ink is ejected from the nozzle corresponding to the pixel portion 9(1) by (5/4) times as much as the ink from the nozzle corresponding to the pixel portion 9(2) based on the same drive signal, the density signal value of the pixel portion 9(1) is corrected to 40, which is (4/5) times 50. Correction of density data like this reduces the variation in the ejection amount of ink among the plurality of nozzles and suppresses the occurrence of density unevenness. Data of a coefficient for correcting the density signal value (typically, data representing a coefficient to be multiplied by the density signal value before correction) is referred to as "shading data".

Meanwhile, in the inkjet printing device, the adhesion between the ink and the base material may become insufficient depending on the type of the base material used for printing. When the adhesion between the ink and the base material is insufficient, a good printed matter cannot be obtained. Thus, in order to obtain good adhesion between the ink and the base material, a transparent processing liquid may be applied onto the base material prior to printing using the ink. As a method for applying the processing liquid to the base material, there are a method of applying the processing liquid to the entire surface of the base material using a roller (hereinafter, referred to as "roller method") and a method of applying the processing liquid to the base material by ejecting the processing liquid from nozzles similarly to applying the ink (hereinafter, referred to as "inkjet method"). In the present specification, to clearly distinguish the ink used for forming an actual print image and the processing liquid, the ink used for forming the actual print image is referred to as "color ink". In the present specification, when simply described as "ink", the concept of the ink includes the color ink and the processing liquid.

As described above, the print quality is stabilized by performing the shading correction processing and applying the processing liquid on the base material prior to printing using a color ink. However, when an appropriate amount of the processing liquid is not applied onto the base material, the print quality degrades. Thus, Japanese Laid-Open Patent Publication No. 2012-000975 describes that the amount of the processing liquid is adjusted as follows. First, the processing liquid with a first amount per unit area is supplied to a first region, and the processing liquid with a second amount per unit area different from the first amount is supplied to a second region. Next, color ink with the same amount per unit area is supplied to the first region and the second region to form an image. Thereafter, the state of the base material and the ink is detected for both the first region and the second region. Then, the supply amount of the processing liquid is adjusted based on the detected state (state of the base material and the ink). Japanese Laid-Open Patent Publication No. 2023-004432 describes that the density is adjusted using an OD curve (an approximate curve representing a correspondence relationship between gradation values and image densities) according to a printing condition.

However, regarding the application of the processing liquid to the base material by the inkjet method, when a permeable base material (base material into which the processing liquid permeates) is employed, good print quality can be maintained, but when coated paper or a non-permeable base material (base material into which the processing liquid does not permeate) is employed, a density difference of the print image may occur due to a difference in the application amount of the processing liquid on the base material. That is, the stabilization of the print quality when coated paper or a non-permeable base material is employed is insufficient in that density unevenness in the print image may occur due to a difference in the ejection amount of the processing liquid between a plurality of nozzles that eject the processing liquid.

In the method described in Japanese Laid-Open Patent Publication No. 2012-000975, the supply amount of the processing liquid is not adjusted for each nozzle. In the method described in Japanese Laid-Open Patent Publication No. 2023-004432, the density adjustment using the OD curve is not performed for each nozzle. Thus, these methods cannot suppress the occurrence of density unevenness of the print image due to the difference in the ejection amount of the processing liquid among the plurality of nozzles.

In the roller method, the processing liquid is applied to the entire surface of the base material. Thus, the required amount of the processing liquid is large, and the cost is high. Therefore, it is desired to be able to maintain good print quality when the inkjet method is employed as the method for applying the processing liquid to the based material.

### SUMMARY OF THE INVENTION

In view of the above circumstances, the present invention relates to an inkjet printing device using a processing liquid, and an object of the present invention is to enable adjustment of the density of a print image so that good print quality is maintained regardless of the type of the base material to be used.

One aspect of the present invention is directed to a density adjustment method for adjusting a density of an image formed by ejecting color ink to a region where a processing liquid is ejected on a base material (3) in an inkjet printing device (1) including a color ink ejection head that ejects the color ink based on color ink density signal values and a processing liquid ejection head that ejects the processing liquid based on processing liquid density signal values, the density adjustment method including:
a color ink density correction value table creation step (S100) of creating a color ink density correction value table (71) representing a correspondence relationship between the color ink density signal values and densities to be appeared by ejecting the color ink to a region where the processing liquid is not ejected on the base material (3);
a processing liquid density correction value table creation step (S110) of creating a plurality of processing liquid density correction value tables (72) each representing a correspondence relationship between the processing liquid density signal values and densities to be appeared by ejecting the color ink to a region where the processing liquid is ejected on the base material (3), the plurality of processing liquid density correction value tables (72) respectively corresponding to a plurality of densities of the color ink;
a first printing step (S120) of forming a first color image on the base material (3) by ejecting the color ink from the color ink ejection head to a first predetermined region on the base material (3) based on a first set value as one of the color ink density signal values;
a first color image capturing step (S130) of capturing the first color image to acquire a density of the first color image;
a color ink density correction value calculation step (S140) of obtaining, based on a difference between the density acquired in the first color image capturing step (S130) and a density associated with the first set value in the color ink density correction value table (71), a color ink density correction value obtained by correcting the first set value;
a second printing step (S150) of forming a second color image on the base material (3) by ejecting the color ink from the color ink ejection head based on the color ink density correction value as one of the color ink density signal values after the processing liquid is ejected from the processing liquid ejection head to a second predetermined region on the base material (3) based on an initial signal value as one of the processing liquid density signal values;
a second color image capturing step (S160) of capturing the second color image to acquire a density of the second color image;
a processing liquid density correction value table selection step (S170) of selecting, from the plurality of processing liquid density correction value tables (72), a processing liquid density correction value table (72) corresponding to the density associated with the first set value in the color ink density correction value table (71); and
a processing liquid density correction value calculation step (S180) of obtaining, based on a difference between the density acquired in the second color image capturing step (S160) and a density associated with the initial signal value in the processing liquid density correction value table (72) selected in the processing liquid density correction value table selection step (S170), a processing liquid density correction value obtained by correcting the initial signal value.

According to such a configuration, a color ink density correction value table representing the correspondence relationship between the color ink density signal values and the densities to be appeared by ejecting color ink to a region where the processing liquid is not ejected and a plurality of processing liquid density correction value tables (a plurality of processing liquid density correction value tables respectively corresponding to a plurality of densities of the color ink) representing the correspondence relationship between the processing liquid density signal values and the densities to be appeared by ejecting color ink to the region where the processing liquid is ejected are prepared. Then, the color ink density correction value obtained by correcting the first set value is obtained, based on the difference between the density of the first color image (image formed only with color ink) based on the first set value as one of the color ink density signal values and the density associated with the first set value in the color ink density correction value table. This can reduce the variation in the amount of color ink to be ejected from the color ink ejection head. Further, the processing liquid density correction value obtained by correcting the initial signal value is obtained, based on the difference between the density of the second color image (image formed by processing liquid and color ink) formed by ejecting color ink based on the color ink density correction value to the region where processing liquid is ejected based on the initial signal value as one of the processing liquid density signal values and the density associated with the initial signal value in the processing liquid density correction value table corresponding to the first set value. This can reduce the variation in the amount of processing liquid to be ejected from the processing liquid ejection head. From the above, regarding the ink jet printing device using processing liquid, it is possible to adjust the density of the print image such that good print quality is maintained regardless of the type of the base material to be used. In addition, since good print quality is maintained, the necessity for reprinting is reduced, and unnecessary consumption of the base material and ink is suppressed. Thus, it is possible to contribute to the achievement of the SDGs (sustainable development goals).

Another aspect of the present invention is directed to a density adjustment method for adjusting a density of an image formed by ejecting color ink to a region where a processing liquid is ejected on a base material (3) in an inkjet printing device (1) including a color ink ejection head that ejects the color ink based on color ink density signal values and a processing liquid ejection head that ejects the processing liquid based on processing liquid density signal values, the density adjustment method including:
a processing liquid density correction value table creation step (S1000) of creating a plurality of processing liquid density correction value tables (72) each representing a correspondence relationship between the processing liquid density signal values and densities to be appeared by ejecting the color ink to a region where the processing liquid is ejected on the base material (3), the plurality of processing liquid density correction value tables (72) respectively corresponding to a plurality of densities of the color ink;
a printing step (S1100) of forming a first color image by ejecting the color ink from the color ink ejection head to a first predetermined region on the base material (3) based on a first set value as one of the color ink density signal value and forming a second color image by ejecting the color ink from the color ink ejection head based on the first set value as one of the color ink density signal values after the processing liquid is ejected from the processing liquid ejection head to a second predetermined region on the base material (3) based on an initial signal value as one of the processing liquid density signal values;
a first color image capturing step (S1200) of capturing the first color image to acquire a density of the first color image;
a second color image capturing step (S1300) of capturing the second color image to acquire a density of the second color image;
a processing liquid density correction value table selection step (S1400) of selecting, from the plurality of processing liquid density correction value tables (72), a processing liquid density correction value table (72) corresponding to the density acquired in the first color image capturing step (S1200); and
a processing liquid density correction value calculation step (S1500) of obtaining, based on a difference between the density acquired in the second color image capturing step (S1300) and a density associated with the initial signal value in the processing liquid density correction value table (72) selected in the processing liquid density correction value table selection step (S1400), a processing liquid density correction value obtained by correcting the initial signal value.

According to such a configuration, a plurality of processing liquid density correction value tables (a plurality of processing liquid density correction value tables respectively corresponding to a plurality of densities of color ink) representing the correspondence relationship between the processing liquid density signal values and the densities to be appeared by ejecting the color ink to the region where the processing liquid is ejected is prepared. Then, the processing liquid density correction value obtained by correcting the initial signal value is obtained, based on the difference between the density of the second color image formed by the processing liquid based on the initial signal value as one of the processing liquid density signal values and the color ink based on the first set value as one of the color ink density signal values and the density associated with the initial signal value in the processing liquid density correction value table. Here, the processing liquid density correction value table to be referred to when the processing liquid density correction value is obtained is selected depending on the density of the first color image formed only with the color ink based on the first set value as one of the color ink density signal values. Accordingly, the variation in the amount of processing liquid to be ejected from the processing liquid ejection head can be reduced regardless of the amount of color ink to be ejected from the color ink ejection head. From the above, regarding the ink jet printing device using processing liquid, it is possible to adjust the density of the print image such that good print quality is maintained regardless of the type of the base material to be used. In addition, since good print quality is maintained, the necessity for reprinting is reduced, and unnecessary consumption of the base material and ink is suppressed. Thus, it is possible to contribute to the achievement of the SDGs (sustainable development goals).

These and other objects, features, modes, and advantageous effects of the present invention will become more apparent from the following detailed description of the present invention with reference to the accompanying drawings.

### BRIEF DESCRIPTION OF THE DRAWINGS

Fig. 1 is a schematic diagram illustrating an example of an overall configuration of an inkjet printing device according to a first embodiment of the present invention.
Fig. 2 is a plan view illustrating a configuration example of a primer application unit (processing liquid application portion) and a recording unit in the first embodiment.
Fig. 3 is a diagram for describing the disposition of nozzles in an ejection head (color ink ejection head, primer ejection head (processing liquid ejection head)) in the first embodiment.
Fig. 4 is a diagram for describing a positional relationship between a plurality of nozzles included in the primer ejection head and a plurality of nozzles included in the color ink ejection head in the first embodiment.
Fig. 5 is a block diagram illustrating a schematic functional configuration of a control unit realized by executing a predetermined control program in a print control device in the first embodiment.
Fig. 6 is a diagram for describing a color ink density correction value table in the first embodiment.
Fig. 7 is a diagram for describing a primer density correction value table (processing liquid density correction value table) in the first embodiment.
Fig. 8 is a diagram for describing that the color ink density correction value table needs to be prepared for each color of color ink in the first embodiment.
Fig. 9 is a diagram for describing that the primer density correction value table (processing liquid density correction value table) needs to be prepared for each of a plurality of levels of densities of one color ink in the first embodiment.
Fig. 10 is a diagram for describing a case where color ink is applied with a density signal value of 10% on primer applied with a density signal value of 20% to a base material in the first embodiment.
Fig. 11 is a flowchart illustrating a schematic procedure of processing related to density adjustment in the first embodiment.
Fig. 12 is a flowchart illustrating a detailed procedure of primer shading data generation processing (processing liquid shading data generation processing) in the first embodiment.
Fig. 13 is a diagram for describing the densities of a first color image in the first embodiment.
Fig. 14 is a diagram for describing a method for obtaining a color ink density correction value in the first embodiment.
Fig. 15 is a diagram for describing a first predetermined region and a second predetermined region in the first embodiment.
Fig. 16 is a diagram schematically illustrating a color image when it is assumed that the color ink is ejected based on the color ink density correction value to a region where the primer (processing liquid) is not applied in the first embodiment.
Fig. 17 is a diagram for describing the densities of a second color image in the first embodiment.
Fig. 18 is a diagram for describing a method for obtaining a primer density correction value (processing liquid density correction value) in the first embodiment.
Fig. 19 is a flowchart illustrating a detailed procedure of color shading data generation processing in the first embodiment.
Fig. 20 is a diagram schematically illustrating a color shading chart for generating color shading data in the first embodiment.
Fig. 21 is a diagram for describing a method for obtaining the color shading data in the first embodiment.
Fig. 22 is a flowchart illustrating a schematic procedure of processing related to density adjustment in a modification of the first embodiment.
Fig. 23 is a flowchart illustrating a detailed procedure of shading data generation processing in the modification.
Fig. 24 is a flowchart illustrating a detailed procedure of primer shading data generation processing (processing liquid shading data generation processing) in a second embodiment.
Fig. 25 is a diagram for describing a first predetermined region and a second predetermined region in the second embodiment.
Fig. 26 is a diagram for describing the densities of a first color image and a second color image in the second embodiment.
Fig. 27 is a diagram for describing a selection of a primer density correction value table (processing liquid density correction value table) in the second embodiment.
Fig. 28 is a diagram for describing an overview of shading correction processing related to a conventional example.

### DETAILED DESCRIPTION OF PREFERRED EMBODIMENTS

Hereinafter, embodiments of the present invention will be described with reference to the accompanying drawings. As for a second embodiment, points different from a first embodiment will be mainly described.

### <1. First Embodiment>

### <1.1 Configuration of Inkjet Printing Device>

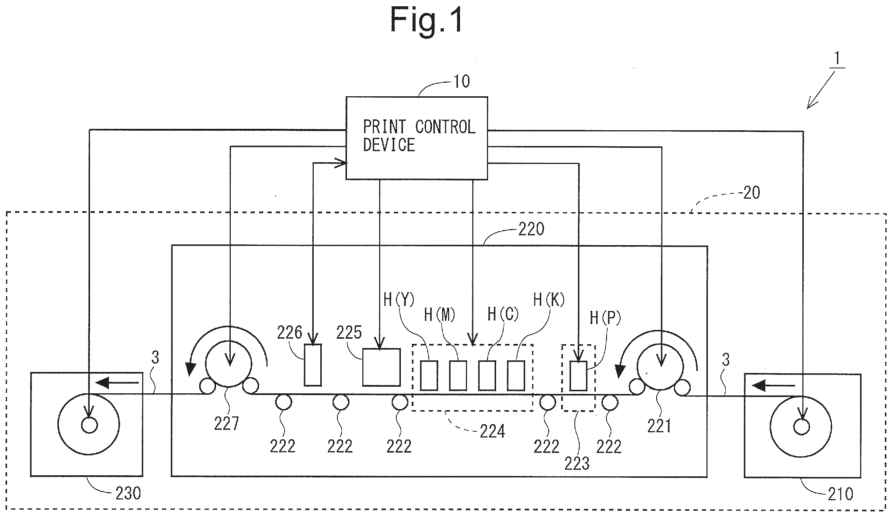

Fig. 1 is a schematic diagram illustrating an example of an overall configuration of an inkjet printing device 1 according to a first embodiment of the present invention. The inkjet printing device 1 is a printing device capable of applying primer, which is a type of transparent processing liquid, to a base material 3 as a printing medium (printing paper, film, or the like) before printing using color ink. The primer is applied to the base material 3 by the inkjet method described above.

As illustrated in Fig. 1, the inkjet printing device 1 includes a printer body 20 and a print control device 10 that controls the operation of the printer body 20. The printer body 20 includes a sheet feeding unit 210 that supplies the base material 3 to a printing mechanism 220, the printing mechanism 220 that performs printing on the base material 3, and a sheet winding unit 230 that winds the base material 3 after printing in a roll shape.

The printing mechanism 220 includes a first drive roller 221 for conveying the base material 3 to the inside, a plurality of support rollers 222 for conveying the base material 3 inside the printing mechanism 220, a primer application unit (processing liquid application portion) 223 that applies the primer to the base material 3, a recording unit 224 that records a print image on the base material 3 with a color ink, a drying mechanism 225 that dries the base material 3 on which the print image is recorded, an inline scanner 226 as an imaging device that captures the print image, and a second drive roller 227 for outputting the base material 3 from the inside of the printing mechanism 220. A drying mechanism may be provided between the primer application unit 223 and the recording unit 224 in addition to the drying mechanism 225. The primer application unit 223 is disposed upstream with respect to the recording unit 224 in the conveyance direction of the base material 3 so that the primer is applied to the base material 3 before printing using the color ink is performed. The primer application unit 223 includes a primer head unit H(P) that ejects the primer. The recording unit 224 includes a K color head unit H(K) that ejects K color (black) ink, a C color head unit H(C) that ejects C color (cyan) ink, an M color head unit H(M) that ejects M color (magenta) ink, and a Y color head unit H(Y) that ejects Y color (yellow) ink. Imaging data (captured image) obtained by the inline scanner 226 capturing the print image is sent to the print control device 10.

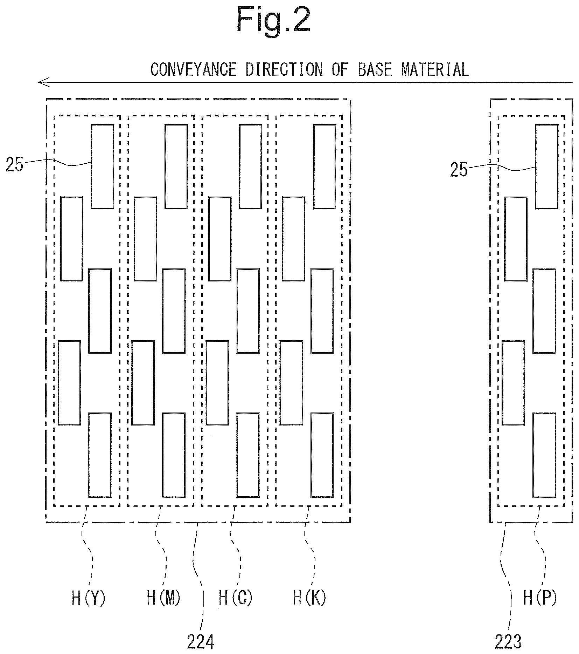

Fig. 2 is a plan view illustrating a configuration example of the primer application unit 223 and the recording unit 224. As described above, the primer application unit 223 is disposed upstream with respect to the recording unit 224 in the conveyance direction of the base material 3. Thus, the primer can be applied to the base material 3 before printing is performed on the base material 3 using the color ink. As illustrated in Fig. 2, the primer application unit 223 is configured by the primer head unit (processing liquid head unit) H(P), and the recording unit 224 is configured by the K color head unit H(K), the C color head unit H(C), the M color head unit H(M), and the Y color head unit H (Y) disposed in a row in the conveyance direction of the base material 3. A direction orthogonal to the conveyance direction of the base material 3 is referred to as a width direction. Each head unit H includes a plurality of ejection heads (print heads) 25 disposed in a staggered manner. Each ejection head 25 includes a large number of nozzles (not illustrated in Fig. 2). Each nozzle of the ejection head 25 included in the primer head unit H(P) ejects the primer, each nozzle of the ejection head 25 included in the K color head unit H(K) ejects K color ink, each nozzle of the ejection head 25 included in the C color head unit H(C) ejects C color ink, each nozzle of the ejection head 25 included in the M color head unit H(M) ejects M color ink, and each nozzle of the ejection head 25 included in the Y color head unit H(Y) ejects Y color ink. Hereinafter, the ejection head 25 included in the primer head unit H(P) is referred to as "primer ejection head" (processing liquid ejection head), and the ejection head 25 included in the K color head unit H(K), the ejection head 25 included in the C color head unit H(C), the ejection head 25 included in the M color head unit H(M), and the ejection head 25 included in the Y color head unit H(Y) are collectively referred to as "color ink ejection head". The primer ejection head is denoted by reference numeral 25(P), and the color ink ejection head is denoted by reference numeral 25(I).

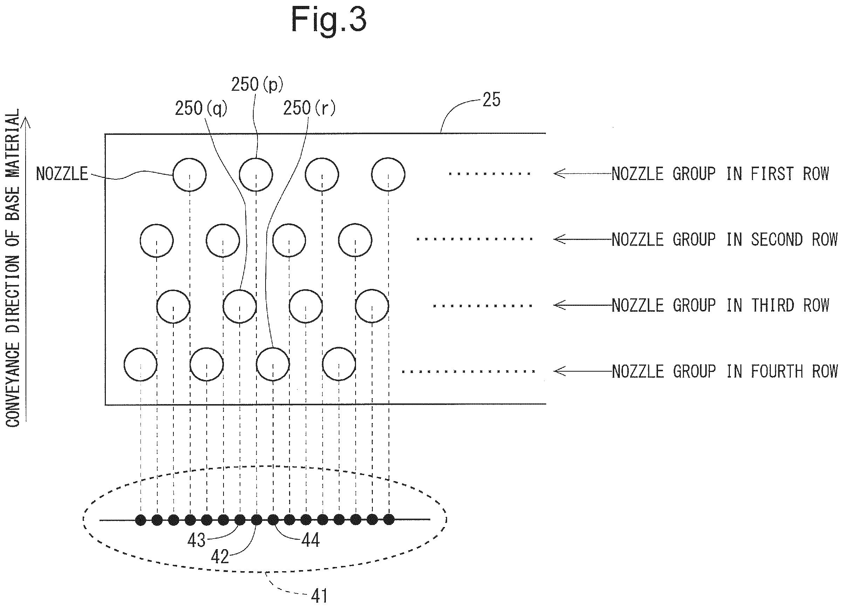

Fig. 3 is a diagram for describing the disposition of the nozzles in the ejection head 25 (color ink ejection head 25(I), primer ejection head 25(P)). Typically, the ejection head 25 includes a plurality of rows of nozzle groups each including a plurality of nozzles disposed side by side in the width direction (direction orthogonal to the conveyance direction of the base material 3). In the example illustrated in Fig. 3, four rows of nozzle groups are included in the ejection head 25. In Fig. 3, a portion denoted by reference numeral 41 schematically illustrates landing positions, on the base material 3, of the ink ejected from nozzles. The plurality of nozzles in the ejection head 25 are disposed such that the landing position of the ink ejected from a nozzle included in the nozzle group in the first row, the landing position of the ink ejected from a nozzle included in the nozzle group in the second row, the landing position of the ink ejected from a nozzle included in the nozzle group in the third row, and the landing position of the ink ejected from a nozzle included in the nozzle group in the fourth row are different from each other. For example, the landing position of the ink ejected from each nozzle included in the nozzle group in the first row is a position between the landing position of the ink ejected from the nozzle included in the nozzle group in the third row and the landing position of the ink ejected from the nozzle included in the nozzle group in the fourth row. In the example illustrated in Fig. 3, the landing position 42 of the ink ejected from the nozzle denoted by reference numeral 250(p) is a position between the landing position 43 of the ink ejected from the nozzle denoted by the reference numeral 250(q) and the landing position 44 of the ink ejected from the nozzle denoted by reference numeral 250(r).

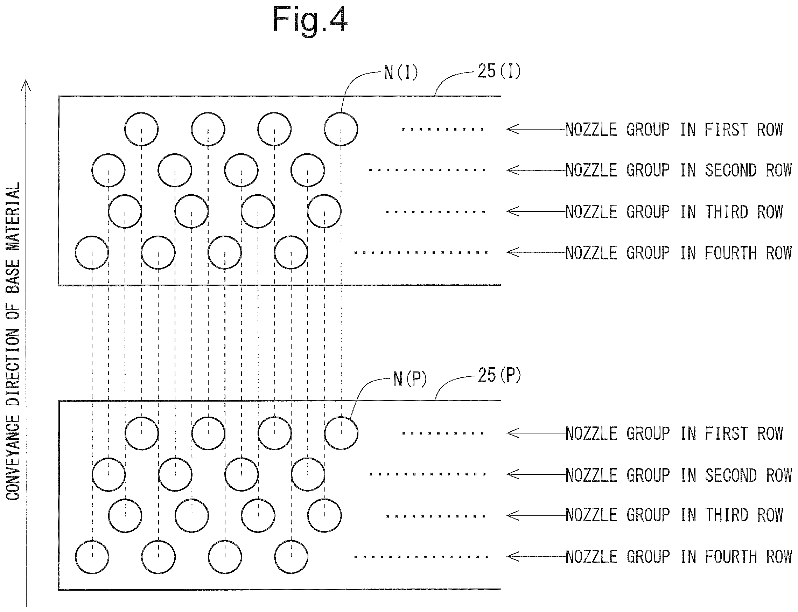

The plurality of nozzles included in the primer ejection head 25(P) and the plurality of nozzles included in the color ink ejection head 25(I) are disposed in one-to-one correspondence, for example, as illustrated in Fig. 4 (one nozzle N(P) of the primer ejection head 25(P) is prepared for corresponding one nozzle N(I) of the color ink ejection head 25(I), and the nozzle N(I) and the nozzle N(P) corresponding to the nozzle N(I) are disposed such that the position of the nozzle N(I) in the width direction coincides with the position of the nozzle N(P) in the width direction) . Thus, the color ink ejected from each nozzle included in the color ink ejection head 25(I) lands on the primer ejected from the nozzle included in the primer ejection head 25(P) and landed on the base material 3.

The configuration illustrated in Figs. 1 to 4 is an example. That is, specific configuration of each of the printing mechanism 220, the primer application unit 223, the recording unit 224, and the ejection head 25 (the color ink ejection head 25(I), the primer ejection head 25(P)) is not limited to the configuration illustrated in Figs. 1 to 4.

As described above, the inkjet printing device 1 according to the present embodiment includes the primer ejection head 25(P) that ejects primer in addition to the color ink ejection head 25(I) that ejects color ink. Then, as the density adjustment processing, shading correction processing for color ink and shading correction processing for primer are performed. In this regard, hereinafter, the shading data for controlling the ejection amount of ink from each nozzle included in the color ink ejection head 25(I) is referred to as "color shading data", and the shading data for controlling the ejection amount of the primer from each nozzle included in the primer ejection head 25(P) is referred to as "primer shading data". Further, hereinafter, the nozzle that ejects color ink may be referred to as "color ink ejection nozzle", and the nozzle that ejects the primer may be referred to as "primer ejection nozzle".

### <1.2 Functional Configuration>

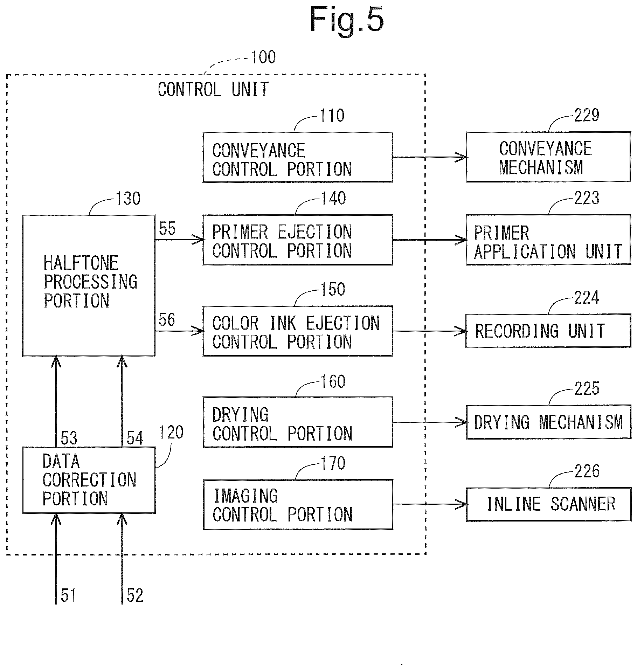

Fig. 5 is a block diagram illustrating a schematic functional configuration of a control unit 100 realized by executing a predetermined control program in the print control device 10. The control unit 100 schematically includes a conveyance control portion 110, a data correction portion 120, a halftone processing portion 130, a primer ejection control portion 140, a color ink ejection control portion 150, a drying control portion 160, and an imaging control portion 170.

The conveyance control portion 110 controls a speed (conveyance speed) at which the conveyance mechanism 229 conveys the base material 3. The conveyance mechanism 229 is realized by the sheet feeding unit 210, the first drive roller 221, the plurality of support rollers 222, the second drive roller 227, and the sheet winding unit 230 (see Fig. 1).

The data correction portion 120 performs shading correction processing on the primer data 51 for applying the primer to the base material 3 and the print data 52 representing a color image to be printed. The primer data 53 after correction and the print data 54 after correction are provided to the halftone processing portion 130. Another correction processing may be performed by the data correction portion 120 in addition to the shading correction processing.

The halftone processing portion 130 generates halftone image data including information indicating a dot size of ink corresponding to each pixel by performing halftone processing on the data to be printed. In the present embodiment, halftone image data 55 for the primer is generated by performing the halftone processing on the primer data 53 after correction, and halftone image data 56 for color ink is generated by performing the halftone processing on the print data 54 after correction. As the dot sizes of the ink, for example, three-level sizes (L size, M size, S size) are prepared. A specific method of the halftone processing is not particularly limited, and a known method such as an error diffusion method or a dither method, for example, can be employed.

The primer ejection control portion 140 controls the amount of the primer to be ejected from each nozzle included in each primer ejection head 25(P) constituting the primer application unit 223 based on the halftone image data 55 for primer. The color ink ejection control portion 150 controls the amount of color ink to be ejected from each nozzle included in each color ink ejection head 25(I) constituting the recording unit 224 based on the halftone image data 56 for color ink.

The drying control portion 160 controls a temperature (drying temperature) at which the drying mechanism 225 dries the base material 3 after printing. The imaging control portion 170 controls the imaging timing of the print image by the inline scanner 226.

### <1.3 Table Necessary for Shading Correction Processing>

As described above, in the present embodiment, as the density adjustment processing, shading correction processing for color ink and shading correction processing for primer are performed. A table necessary for the shading correction processing will be described.

The shading correction processing for color ink is processing for reducing the variation in the ejection amount of color ink among the plurality of color ink ejection nozzles, and a color ink density correction value table described below is required for the processing. The shading correction processing for primer is processing for reducing the variation in the ejection amount of the primer among the plurality of primer ejection nozzles, and a primer density correction value table (processing liquid density correction value table) described below is required for the processing.

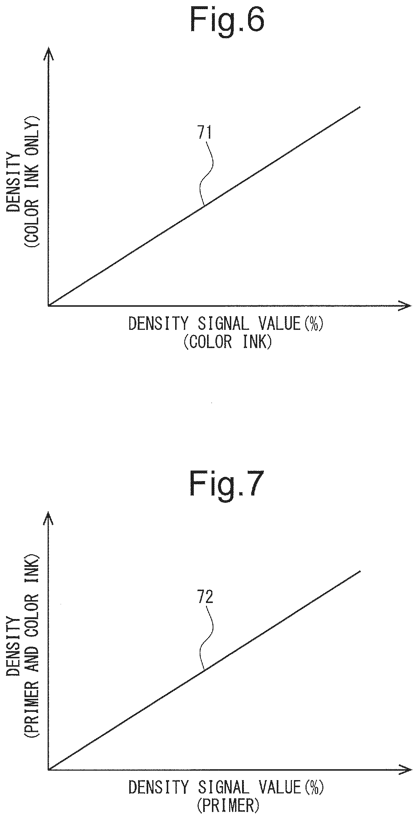

The color ink density correction value table is a table representing a correspondence relationship between density signal values for controlling the amount of the color ink ejected from the color ink ejection nozzle and densities (ideal densities) to be appeared by ejecting the color ink to a region where the primer is not ejected on the base material 3. In the present embodiment, the density signal value corresponds to a dot percent, and can take a value from 0% to 100%. The color ink density correction value table is schematically represented by, for example, a straight line denoted by reference numeral 71 in Fig. 6. However, in practice, the color ink density correction value table holds a corresponding density (ideal density) for each of the density signal values of a plurality of levels from 0% to 100%.

The primer density correction value table is a table representing a correspondence relationship between density signal values for controlling the amount of the primer ejected from the primer ejection nozzle and densities (ideal densities) to be appeared by ejecting an amount of color ink corresponding to a predetermined density signal value to a region where the primer is ejected on the base material 3. The primer density correction value table is schematically represented by, for example, a straight line denoted by reference numeral 72 in Fig. 7. However, in practice, the primer density correction value table holds a corresponding density (ideal density) for each of the density signal values of a plurality of levels from 0% to 100%.

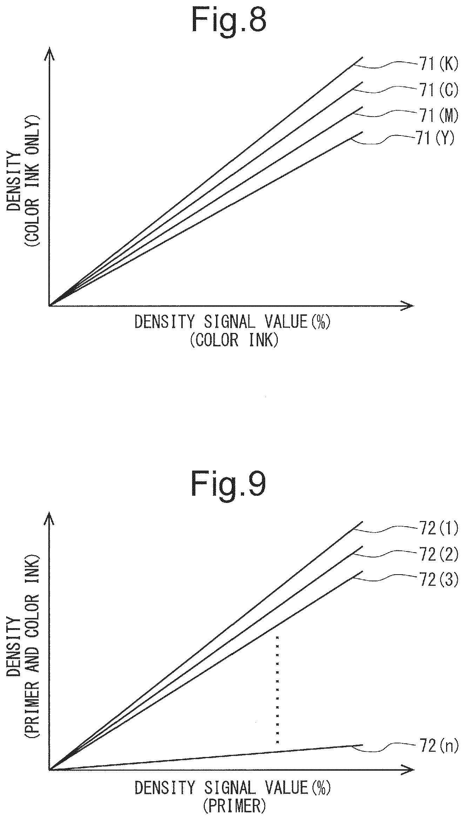

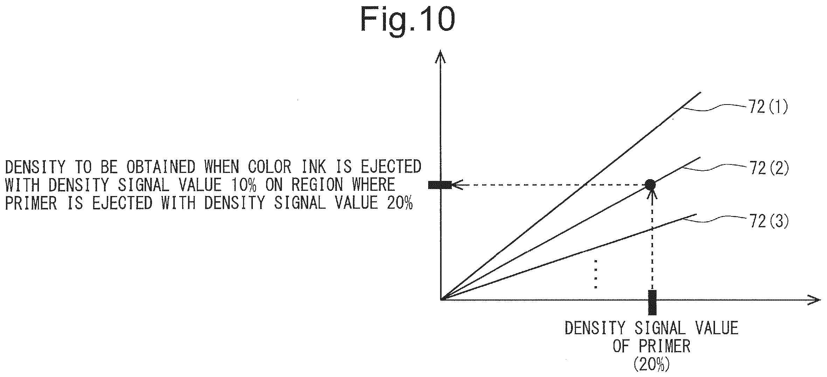

The color ink density correction value table needs to be prepared for each color of color ink. That is, for example, as illustrated in Fig. 8, it is necessary to prepare a color ink density correction value table 71(K) for K color, a color ink density correction value table 71(C) for C color, a color ink density correction value table 71(M) for M color, and a color ink density correction value table 71(Y) for Y color. The primer density correction value table needs to be prepared for each of densities of a plurality of levels from 0% to 100% for a certain color ink (for example, C color ink). That is, for example, as illustrated in Fig. 9, it is necessary to prepare n primer density correction value tables 72(1) to 72(n) respectively corresponding to densities of n levels from 0% to 100% for one color ink. For example, consider a case where the primer is applied to the base material 3 with a density signal value of 20%, and then a color ink is applied on the primer in an overlapping manner with a density signal value of 10%. In this case, first, the straight line 72(2) corresponding to the density signal value 10% of the color ink is selected, and then the density signal value 20% of the primer is applied to the straight line 72(2), whereby the density to be obtained when the color ink is ejected with the density signal value of 10% on a region where the primer is ejected with the density signal value of 20% is specified (see Fig. 10).

In the following description, in order to distinguish between the density signal value for controlling the amount of color ink to be ejected from the color ink ejection nozzle and the density signal value for controlling the amount of primer to be ejected from the primer ejection nozzle, the former may be referred to as "color ink density signal value", and the latter may be referred to as "primer density signal value".

### <1.4 Density Adjustment Method>

Hereinafter, a density adjustment method (method for adjusting the density of an image formed by ejecting color ink to a region where the primer is ejected on the base material 3) in the present embodiment will be described.

### <1.4.1 Schematic Procedure>

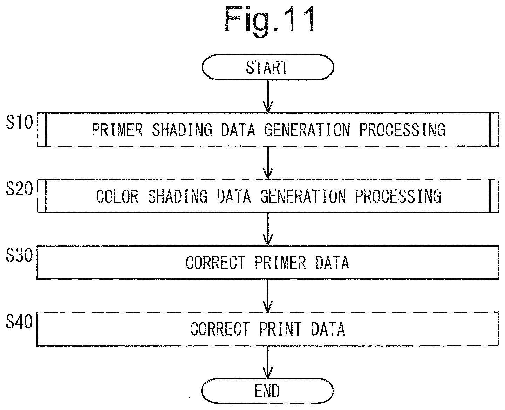

Fig. 11 is a flowchart illustrating a schematic procedure of processing related to density adjustment. First, primer shading data generation processing (processing liquid shading data generation processing) is performed (step S10). In step S10, the color ink density correction value table and the primer density correction value table are referred to, and the primer shading data is generated based on the imaging data obtained by capturing the print image of a predetermined test chart with the inline scanner 226. Next, color shading data generation processing is performed (step S20). In step S20, the color ink density correction value table is referred to, and the color shading data is generated based on the imaging data obtained by capturing the print image of a color shading chart described later with the inline scanner 226. The primer shading data generation processing and the color shading data generation processing will be described in detail later. The processing of step S10 and step S20 does not need to be performed for each print job, and may be performed at an appropriate timing in consideration of the usage status of the inkjet printing device 1 and the like.

The processing of step S30 and step S40 is performed for each print job by the data correction portion 120 (see Fig. 5) when printing output based on the print job is actually executed. In step S30, the primer data (data of primer density signal value) 51 held in advance for applying the primer to the base material 3 is corrected using the primer shading data generated in step S10. Thereafter, in step S40, the print data 52 representing the color image to be printed is corrected using the color shading data generated in step S20. By performing the shading correction processing on the primer data 51 and the print data 52 in this manner, the density of the print image is adjusted.

### <1.4.2 Primer Shading Data Generation Processing>

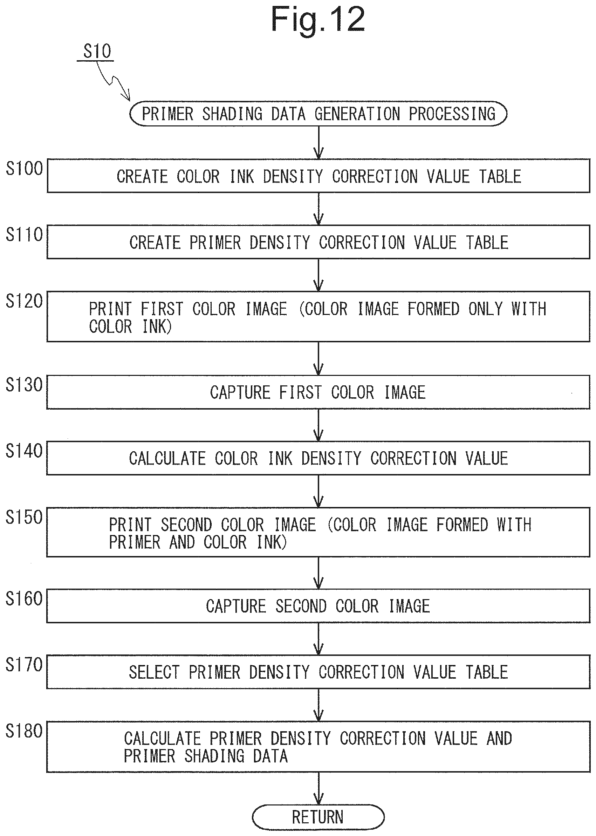

A detailed procedure of the primer shading data generation processing will be described with reference to the flowchart illustrated in Fig. 12. In this primer shading data generation processing, ink of one color (for example, C color) is used as the color ink.

First, the above-described color ink density correction value table is created (step S100). In this regard, specifically, the color ink density correction value table is created, for example, by the following procedure. First, the color ink is ejected from a large number of color ink ejection nozzles in a favorable state in the color ink ejection head 25(I) based on multi-level density signal values from 0% to 100%, whereby a color image including multi-level density regions is formed. The color image is captured by the inline scanner 226, whereby a large number of data in which the density signal value and the density are combined is acquired. Linear approximation using the least squares method is performed based on the large number of data, whereby a linear expression representing the correspondence relationship between the density signal values (color ink density signal values) and the densities is obtained. This linear expression corresponds to the color ink density correction value table.

After the color ink density correction value table is created, the above-described primer density correction value table is created (step S110). In step S110, a plurality of primer density correction value tables respectively corresponding to a plurality of densities (for example, the densities in increments of 10% from 0% to 100%) of the color ink are created. Specifically, each primer density correction value table is created, for example, by the following procedure. Primer regions having multi-level densities are formed by ejecting the primer from a large number of primer ejection nozzles in a favorable state based on the multi-level density signal values (primer density signal values) from 0% to 100%. A color image (color image in which the color ink is superimposed on the primer) is formed by ejecting the color ink from a large number of color ink ejection nozzles in a favorable state in the color ink ejection head 25(I) based on the density signal value (color ink density signal value) corresponding to the target density to each of the primer regions having multi-level densities. The color image is captured by the inline scanner 226, whereby a large number of data in which the density signal value (primer density signal value) and the density are combined is acquired. Linear approximation using the least squares method is performed based on the large number of data, whereby a linear expression representing the correspondence relationship between the density signal values (primer density signal values) and the densities is obtained. This linear expression corresponds to the primer density correction value table.

Next, a color image (test chart) is printed by ejecting the color ink from the color ink ejection head 25(I) to a predetermined region (hereinafter, referred to as "first predetermined region") where the primer is not applied on the base material 3 based on a predetermined density signal value (hereinafter, referred to as "first set value") (step S120). That is, a color image is formed on the base material 3. Hereinafter, for convenience, the color image formed on the base material 3 in step S120 is referred to as "first color image".

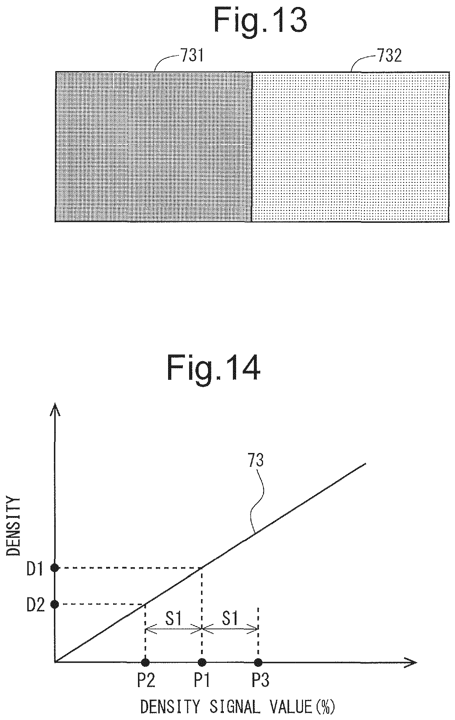

Thereafter, the first color image formed on the base material 3 in step S120 is captured by the inline scanner 226, whereby the density of the first color image is acquired (step S130). Although the color ink is ejected to the entire first predetermined region based on the first set value that is the same density signal value for the entire first predetermined region in step S120, there are individual differences in the nozzles as described above, and thus the density acquired in step S130 may vary depending on the position. In this regard, for convenience of description, assuming that "the amount of color ink ejected from the nozzles belonging to the same color ink ejection head 25(I) is uniform, but there is a difference in the amount of color ink ejected from the nozzles among the different color ink ejection heads 25(I). Similarly, the amount of primer ejected from the nozzles belonging to the same primer ejection head 25(P) is uniform, but there is a difference in the amount of primer ejected from the nozzles among the different primer ejection heads 25(P)", the first color image formed in a region corresponding to a certain two ejection heads (first head and second head) adjacent in the width direction in the first predetermined region is, for example, as illustrated in Fig. 13. In the example illustrated in Fig. 13, the density of the portion 731 corresponding to the first head is different from the density of the portion 732 corresponding to the second head.

As described above, the density acquired in step S130 may vary depending on the position. Thus, in order to obtain a color image in which overall density is uniform, a color ink density correction value obtained by correcting the first set value is obtained based on the difference between the density acquired in step S130 and the density associated with the first set value in the color ink density correction value table (step S140). Here, it is assumed that the color ink density correction value table of the target color (color of the color ink) is schematically represented by a straight line denoted by reference numeral 73 in Fig. 14. In this case, when the first set value is P1 and the density acquired in step S130 for the portion 731 (see Fig. 13) corresponding to the first head is D2, a difference S1 between P2, which is the density signal value corresponding to D2, and the first set value P1 is obtained. Then, the color ink density correction value for the portion 731 corresponding to the first head is obtained by adding the difference S1 to the first set value P1. In this example, the color ink density correction value is P3. P2 corresponds to a first acquired density signal value, and the difference S1 corresponds to the color ink density signal difference value.

After the color ink density correction value is obtained, a color image in which the color ink is superimposed on the primer is formed in a predetermined region (hereinafter, referred to as "second predetermined region". The second predetermined region is a region at the same position in the width direction as the first predetermined region and at a different position in the feeding direction from the first predetermined region) on the base material 3 (step S150). In step S150, first, the primer is ejected from the primer ejection head 25(P) based on an initial signal value as the primer density signal value. Next, the color ink is ejected from the color ink ejection head 25(I) based on the color ink density correction value as the color ink density signal value. In this manner, the color image (test chart) in which the color ink is superimposed on the primer is printed. Hereinafter, for convenience, the color image formed on the base material 3 in step S150 is referred to as "second color image".

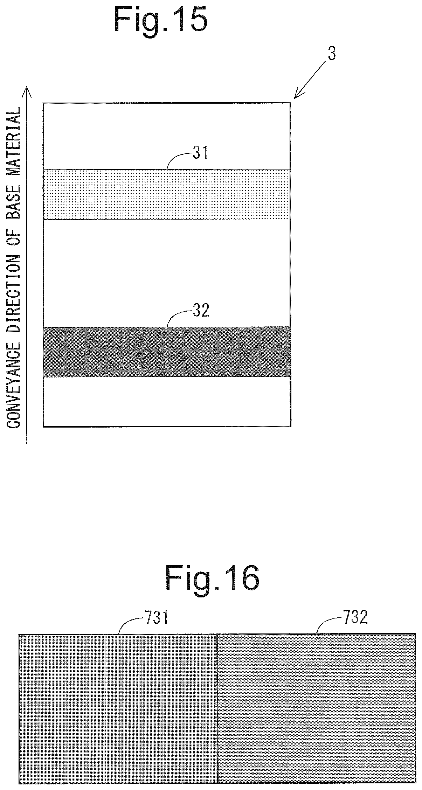

Regarding the region on the base material 3, as illustrated in Fig. 15, the second predetermined region 32 is positioned upstream with respect to the first predetermined region 31 in the conveyance direction of the base material 3. The first color image formed only with color ink is printed in the first predetermined region 31, and the second color image formed with primer and color ink is printed in the second predetermined region 32. When the first color image is printed on the first predetermined region 31, the color ink is ejected from the color ink ejection head 25(I) based on the first set value P1, whereas when the second color image is printed on the second predetermined region 32, the color ink is ejected from the color ink ejection head 25(I) based on the color ink density correction value P3 (see Fig. 14).

After the second color image is formed on the base material 3, the second color image is captured by the inline scanner 226, whereby the density of the second color image is acquired (step S160).

Next, the primer density correction value table corresponding to the density associated with the first set value in the color ink density correction value table is selected from the plurality of primer density correction value tables created in step S110 (step S170). In the example illustrated in Fig. 14, the density associated with the first set value P1 in the color ink density correction value table is D1. Thus, in the case of this example, from the plurality of primer density correction value tables respectively corresponding to a plurality of densities (for example, the densities in increments of 10% from 0% to 100%), the primer density correction value table corresponding to the density closest to D1 among the plurality of densities is selected.

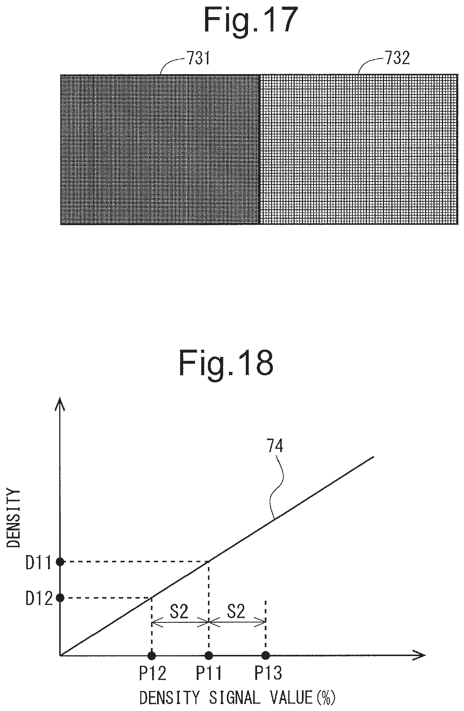

When the color ink is ejected from the color ink ejection head 25(I) to a region where the primer is not applied based on the color ink density correction value, a color image in which overall density is uniform is formed. For example, as illustrated in Fig. 16, the density of the portion 731 corresponding to the first head is the same as the density of the portion 732 corresponding to the second head. However, in step S150, primer is applied to the second predetermined region before color ink is ejected. Thus, even though color ink is ejected from the color ink ejection head 25(I) based on the color ink density correction value in step S150, the density acquired in step S160 may vary depending on the position due to the individual differences of the primer ejection nozzles. For example, as illustrated in Fig. 17, the density of the portion 731 corresponding to the first head may be different from the density of the portion 732 corresponding to the second head. Thus, in order to obtain a color image in which overall density is uniform, a primer density correction value (processing liquid density correction value) obtained by correcting the initial signal value is obtained based on the difference between the density acquired in step S160 and the density associated with the initial signal value in the primer density correction value table selected in step S170 (step S180). Here, it is assumed that the primer density correction value table selected in step S170 is schematically represented by a straight line denoted by reference numeral 74 in Fig. 18. In this case, when the initial signal value is P11, and the density acquired in step S160 for the portion 731 corresponding to the first head is D12, a difference S2 between P12, which is the density signal value corresponding to D12, and the initial signal value P11 is obtained. Then, the primer density correction value for the portion 731 corresponding to the first head is obtained by adding the difference S2 to the initial signal value P11. In this example, the primer density correction value is P13. In step S180, primer shading data is obtained by further dividing the primer density correction value P13 by the initial signal value P11. The primer shading data is data of a coefficient for correcting the primer density signal value when the print output based on the print job is actually executed, and takes a value such as "1.1". When the primer shading data is obtained, the primer shading data generation processing ends. P12 corresponds to a second acquired density signal value, and the difference S2 corresponds to the primer density signal difference value.

In the above-described example, for convenience of description, it is assumed that the amount of ink ejected from the nozzle is different for each ejection head. In this case, the primer shading data is obtained for each ejection head. However, in practice, the ejection amount of ink is different for each nozzle. Thus, typically, the primer shading data is obtained for each nozzle. When the variation in the ejection amount of ink among the plurality of nozzles included in each ejection head is small, the primer shading data generation processing can be efficiently performed by obtaining the primer shading data for each ejection head.

It is sufficient that the processing of step S100 and the processing of step S110 is performed once in each inkjet printing device 1. The processing of step S120 and after step S120 may be performed at an appropriate timing in consideration of the usage status of the inkjet printing device 1 and the like.

In the present embodiment, a color ink density correction value table creation step is realized by step S100, a processing liquid density correction value table creation step is realized by step S110, a first printing step is realized by step S120, a first color image capturing step is realized by step S130, a color ink density correction value calculation step is realized by step S140, a second printing step is realized by step S150, a second color image capturing step is realized by step S160, a processing liquid density correction value table selection step is realized by step S170, and a processing liquid density correction value calculation step is realized by step S180.

### <1.4.3 Color Shading Data Generation Processing>

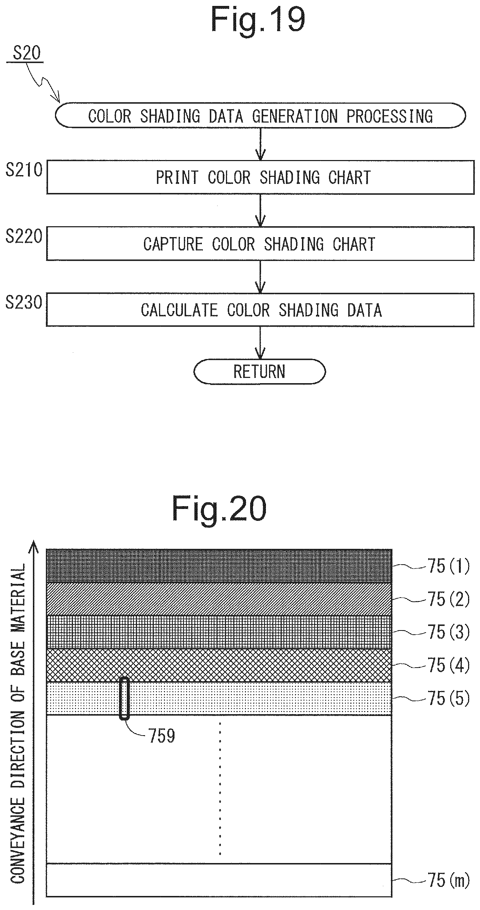

Next, a detailed procedure of the color shading data generation processing will be described with reference to the flowchart illustrated in Fig. 19. The color shading data generation processing is performed for each color of color ink. Thus, as described above, the color ink density correction value table is prepared for each color of color ink.

After the color shading data generation processing is started, first, for example, a color shading chart (inspection image) as illustrated in Fig. 20 is printed (step S210). The color shading chart is an image in which the density changes stepwise in the conveyance direction of the base material 3. Regarding the color shading chart illustrated in Fig. 20, for example, the density of a portion denoted by reference numeral 75(1) is the highest density (for example, 100%) and the density of the portion denoted by reference numeral 75(m) is the lowest density (for example, 0%).

After the color shading chart is printed, the inline scanner 226 captures an image of the color shading chart (step S220). The density of each portion of the printed color shading chart is thus obtained.

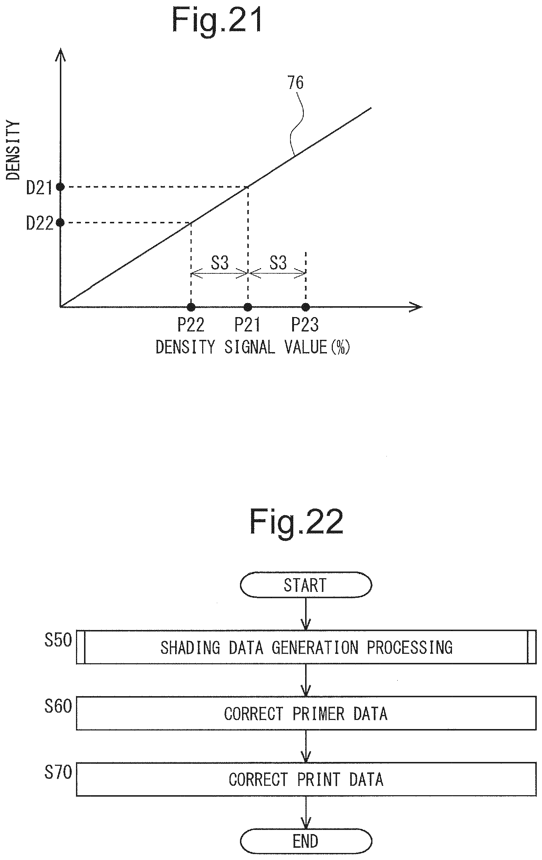

Thereafter, based on the imaging data obtained in step S220, data for controlling the ejection amount of the color ink from the color ink ejection head 25(I) so as to suppress the occurrence of density unevenness is obtained (step S230). This data is the color shading data. Meanwhile, in step S230, the color shading data is obtained for each density of the color shading chart and for each nozzle. In this regard, for example, the color shading data for a portion denoted by reference numeral 759 in Fig. 20 (it is assumed that the portion corresponds to one nozzle) is obtained as follows. It is assumed that the color ink density correction value table of the target color (color of color ink) is schematically represented by a straight line denoted by reference numeral 76 in Fig. 21. In this case, in Fig. 21, when the density signal value corresponding to the density of the portion denoted by reference numeral 75(5) in Fig. 20 is P21, and the density acquired in step S220 for the portion denoted by reference numeral 759 in Fig. 20 is D22, a difference S3 between P22, which is the density signal value corresponding to D22, and P21, which is the density signal value corresponding to the density of the portion denoted by reference numeral 75(5) in Fig. 20, is obtained. Then, the correction value (shading correction value) is obtained by adding the difference S3 to the above P21. In this example, the correction value is P23. Further, the color shading data is obtained by dividing the correction value P23 by the above P21. Like the primer shading data, the color shading data is data of a coefficient, and takes a value such as "1.1". When the color shading data is obtained in step S230, the color shading data generation processing ends.

In the present embodiment, a third printing step is realized by step S210, an inspection image capturing step is realized by step S220, and a shading correction value calculation step is realized by step S230.

### <1.5 Effects>

According to the present embodiment, a color ink density correction value table representing the correspondence relationship between the color ink density signal values and the densities to be appeared by ejecting color ink to a region where primer is not ejected and a plurality of primer density correction value tables (a plurality of primer density correction value tables respectively corresponding to a plurality of densities of the color ink) representing the correspondence relationship between the primer density signal values and the densities to be appeared by ejecting color ink to the region where the primer is ejected are prepared. Then, the color ink density correction value obtained by correcting the first set value is obtained, based on the difference between the density of the first color image (image formed only with color ink) based on the first set value as one of the color ink density signal values and the density associated with the first set value in the color ink density correction value table. This can reduce the variation in the amount of color ink to be ejected from the color ink ejection head 25(I). Further, the primer density correction value obtained by correcting the initial signal value is obtained, based on the difference between the density of the second color image (image formed by primer and color ink) formed by ejecting color ink to the region where primer is ejected based on the initial signal value as one of the primer density signal values based on the color ink density correction value and the density associated with the initial signal value in the primer density correction value table corresponding to the first set value. This can reduce the variation in the amount of the primer to be ejected from the primer ejection head 25(P). From the above, according to the present embodiment, regarding the inkjet printing device 1 using primer, it is possible to adjust the density of the print image such that good print quality is maintained regardless of the type of the base material 3 to be used. In addition, since good print quality is maintained, the necessity for reprinting is reduced, and unnecessary consumption of the base material 3 and ink is suppressed. Thus, it is possible to contribute to the achievement of the SDGs (sustainable development goals) .

### <1.6 Modification>

A modification of the first embodiment will be described. In the first embodiment, the primer shading data and the color shading data are generated by separate pieces of processing. In contrast, in the present modification, the primer shading data and the color shading data are generated by a series of collective processing.

Fig. 22 is a flowchart illustrating a schematic procedure of processing related to density adjustment in the present modification. First, shading data generation processing of generating the primer shading data and the color shading data is performed (step S50). The shading data generation processing will be described later in detail. The processing of step S60 is the same as the processing of step S30 in the first embodiment, and the processing of step S70 is the same as the processing of step S40 in the first embodiment (see Fig. 11).

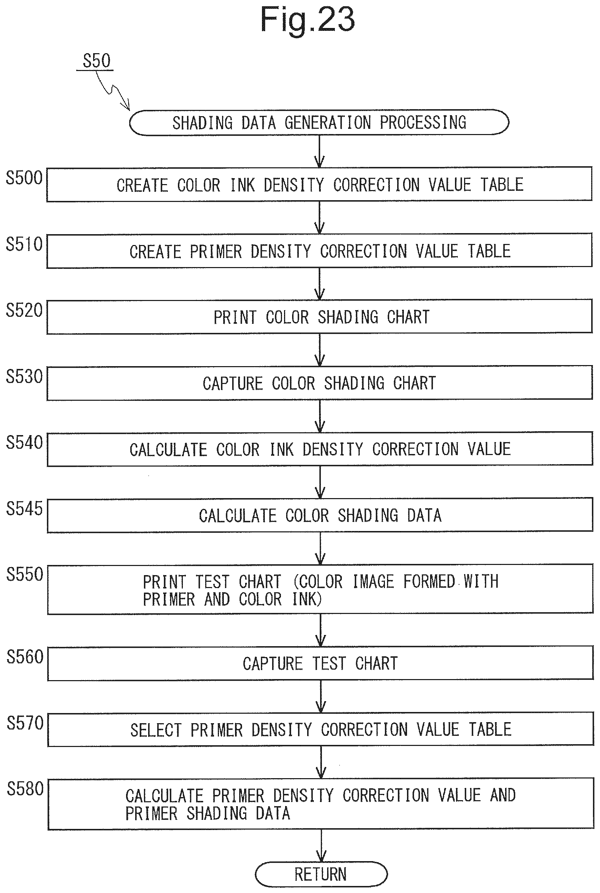

A detailed procedure of the shading data generation processing will be described with reference to the flowchart illustrated in Fig. 23. The processing of steps S500 and S510 is the same as the processing of steps S100 and S110 in the first embodiment (see Fig. 12).

In step S520, the color shading chart as illustrated in Fig. 20 is printed. At this time, primer is not applied onto the base material 3, and the color shading chart is formed only with color ink. Thereafter, the inline scanner 226 captures an image of the color shading chart to acquire the density of each portion of the printed color shading chart (step S530).

Next, the image portion (for example, the portion denoted by reference numeral 75(4) in Fig. 20) corresponding to one predetermined density signal value in the color shading chart is regarded as the first color image in the first embodiment, the one predetermined density signal value is regarded as the first set value in the first embodiment, and a color ink density correction value obtained by correcting the first set value is obtained in the same manner as in the first embodiment (step S540).

After the color ink density correction value is obtained, color shading data is obtained in the same manner as in step S230 (see Fig. 19) in the first embodiment based on the imaging data obtained in step S530 (step S545).

After the color shading data is obtained, a color image in which color ink is superimposed on primer is formed in a predetermined region on the base material 3 (step S550). In step S550, first, the primer is ejected from the primer ejection head 25(P) based on the initial signal value as the primer density signal value. Next, the color ink is ejected from the color ink ejection head 25(I) based on the color ink density correction value as the color ink density signal value. In this manner, the color image (test chart) in which the color ink is superimposed on the primer is printed. The color image formed on the base material 3 in step S550 corresponds to the second color image, and the region where the second color image is formed in step S550 corresponds to the second predetermined region.

After the color image (test chart) is formed on the base material 3, the color image is captured by the inline scanner 226, whereby the density of the color image is acquired (step S560). The processing of steps S570 and S580 is the same as the processing of steps S170 and S180 in the first embodiment (see Fig. 12).

In the present modification, the color ink density correction value table creation step is realized by step S500, the processing liquid density correction value table creation step is realized by step S510, the color ink density correction value calculation step is realized by step S540, the shading correction value calculation step is realized by step S545, the second printing step is realized by step S550, the second color image capturing step is realized by step S560, the processing liquid density correction value table selection step is realized by step S570, and the processing liquid density correction value calculation step is realized by step S580. In addition, since the image portion corresponding to the one predetermined density signal value in the printed color shading chart is regarded as the first color image, the first printing step is realized by step S520, and the first color image capturing step is realized by step S530.

According to the present modification as described above, it is possible to obtain the same effects as those of the first embodiment with less work than the first embodiment.

### <2. Second Embodiment>

### <2.1 Configuration etc.>

The configuration of each of the printing mechanism 220, the primer application unit 223, the recording unit 224, and the ejection head 25 (the color ink ejection head 25(I), the primer ejection head 25(P)) is the same as that in the first embodiment (see Figs. 1 to 4).

### <2.2 Density Adjustment Method>

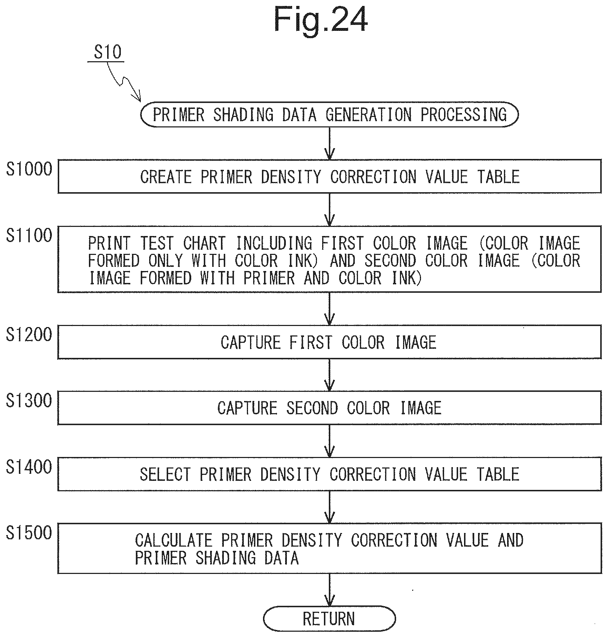

A density adjustment method in the present embodiment will be described. The schematic procedure of the processing related to the density adjustment (see Fig. 11) is the same as that of the first embodiment. The procedure of the color shading data generation processing (see Fig. 19) is substantially the same as that of the first embodiment, but a step of creating the color ink density correction value table (step S100 in Fig. 12) is required before step S230. The procedure of the primer shading data generation processing is different from that of the first embodiment. Thus, hereinafter, a detailed procedure of the primer shading data generation processing in the present embodiment will be described with reference to the flowchart illustrated in Fig. 24.

First, as in step S110 (see Fig. 12) in the first embodiment, a primer density correction value table is created (step S1000). In the present embodiment as well, a plurality of primer density correction value tables respectively corresponding to a plurality of densities (for example, the densities in increments of 10% from 0% to 100%) of color ink are created.

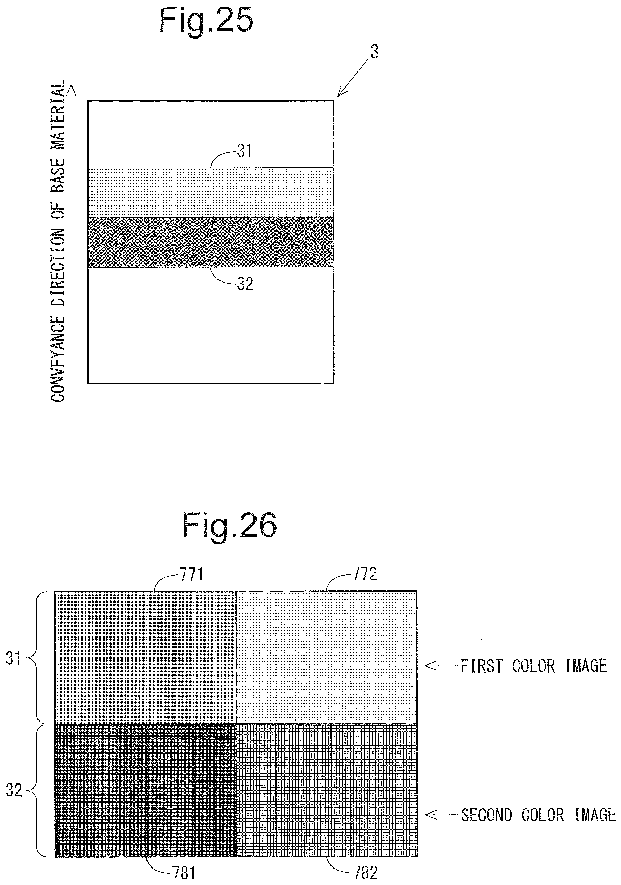

Next, a test chart including a first color image formed only with color ink and a second color image formed with primer and color ink is printed (step S1100). In step S1100, a first predetermined region 31 and a second predetermined region 32 are set on the base material 3, for example, as illustrated in Fig. 25, the first color image is formed in the first predetermined region 31 by ejecting color ink from the color ink ejection head 25(I) to the first predetermined region 31 based on a first set value similar to that in the first embodiment as a color ink density signal value, and the second color image is formed in the second predetermined region 32 by ejecting color ink from the color ink ejection head 25(I) to the second predetermined region 32 based on the first set value as a color ink density signal value after ejecting primer from the primer ejection head 25(P) to the second predetermined region 32 based on an initial signal value similar to that in the first embodiment as a primer density signal value.

Here too, for convenience of description, assuming that "the amount of color ink ejected from the nozzles belonging to the same color ink ejection head 25(I) is uniform, but there is a difference in the amount of color ink ejected from the nozzles among the different color ink ejection heads 25(I). Similarly, the amount of primer ejected from the nozzles belonging to the same primer ejection head 25(P) is uniform, but there is a difference in the amount of primer ejected from the nozzles among the different primer ejection heads 25(P)", the first color image formed in a region corresponding to a certain two ejection heads (first head and second head) adjacent in the width direction in the first predetermined region 31 and the second color image formed in a region corresponding to the two ejection heads in the second predetermined region 32 are, for example, as illustrated in Fig. 26. Although the color ink is ejected to the entire first predetermined region 31 based on the first set value that is the same density signal value for the entire first predetermined region 31 in step S1100, different amounts of color ink are actually ejected from the first head and the second head. Thus regarding the first predetermined region 31, the density of the portion 771 corresponding to the first head is different from the density of the portion 772 corresponding to the second head. As for the second predetermined region 32, the primer is ejected to the entire region based on the initial signal value that is the same density signal value for the entire region, and the color ink is ejected to the entire region based on the first set value that is the same density signal value for the entire region. However, for the same reason as in the first predetermined region 31, also regarding the second predetermined region 32, the density of the portion 781 corresponding to the first head is different from the density of the portion 782 corresponding to the second head.

After the test chart is printed, the first color image formed in the first predetermined region 31 on the base material 3 is captured by the inline scanner 226, whereby the density of the first color image is acquired (step S1200). Further, the second color image formed in the second predetermined region 32 on the base material 3 is captured by the inline scanner 226, whereby the density of the second color image is acquired (step S1300).

Thereafter, the primer density correction value table corresponding to the density acquired in step S1200 is selected from the plurality of primer density correction value tables created in step S1000 (step S1400). When the amount of ink ejected from the nozzles is different for each ejection head as in the above assumption, the primer density correction value table is selected for each ejection head. For example, for the first head, the primer density correction value table schematically represented by the straight line 791 illustrated in a part A of Fig. 27 is selected, and for the second head, the primer density correction value table schematically represented by the straight line 792 illustrated in a part B of Fig. 27 is selected. However, since the ejection amount of ink is actually different for each nozzle, the primer density correction value table is typically selected for each nozzle.

After the primer density correction value table is selected, a primer density correction value obtained by correcting the initial signal value is obtained, based on the difference between the density acquired in step S1300 and the density associated with the initial signal value in the primer density correction value table selected in step S1400 (step S1500). Here, it is assumed that the primer density correction value table selected in step S1400 for the portion corresponding to the first head is schematically represented by the straight line denoted by reference numeral 74 in Fig. 18. In this case, when the initial signal value is P11, and the density acquired in step S1300 for the portion corresponding to the first head is D12, a difference S2 between P12, which is the density signal value corresponding to D12, and the initial signal value P11 is obtained. Then, the primer density correction value for the portion corresponding to the first head is obtained by adding the difference S2 to the initial signal value P11. In this example, the primer density correction value is P13. In step S1500, primer shading data is obtained by further dividing the primer density correction value P13 by the initial signal value P11. When the primer shading data is obtained, the primer shading data generation processing ends.

It is sufficient that the processing of step S1000 is performed once in each inkjet printing device 1. The processing of step S1100 and after step S1100 may be performed at an appropriate timing in consideration of the usage status of the inkjet printing device 1 and the like.

In the present embodiment, a processing liquid density correction value table creation step is realized by step S1000, a printing step is realized by step S1100, the first color image capturing step is realized by step S1200, the second color image capturing step is realized by step S1300, the processing liquid density correction value table selection step is realized by step S1400, and the processing liquid density correction value calculation step is realized by step S1500.

### <2.3 Effects>

According to the present embodiment, a plurality of primer density correction value tables (a plurality of primer density correction value tables respectively corresponding to a plurality of densities of color ink) representing the correspondence relationship between the primer density signal values and the densities to be appeared by ejecting the color ink to the region where the primer is ejected is prepared. Then, the primer density correction value obtained by correcting the initial signal value is obtained, based on the difference between the density of the second color image formed by the primer based on the initial signal value as one of the primer density signal values and the color ink based on the first set value as one of the color ink density signal values and the density associated with the initial signal value in the primer density correction value table. Here, the primer density correction value table to be referred to when the primer density correction value is obtained is selected depending on the density of the first color image formed only with the color ink based on the first set value as one of the color ink density signal values. From the above, the variation in the amount of primer to be ejected from the primer ejection head 25(P) can be reduced regardless of the amount of color ink to be ejected from the color ink ejection head 25(I). Thus, according to the present embodiment, as in the first embodiment, regarding the inkjet printing device 1 using primer, it is possible to adjust the density of the print image such that good print quality is maintained regardless of the type of the base material 3 to be used. In addition, as in the first embodiment, unnecessary consumption of the base material 3 and ink is suppressed, which can contribute to the achievement of SDGs (sustainable development goals). Further, the number of times of printing when performing the primer shading data generation processing can be reduced as compared with the first embodiment.

### <3. Others>

Although the present invention has been described in detail above, the above description is illustrative in all aspects and is not restrictive. It is understood that numerous other changes and variations can be devised without departing from the scope of the present invention. For example, although the inkjet printing device 1 using aqueous ink is employed in each of the above embodiments (including modifications), an inkjet printing device using UV ink (ultraviolet curing ink) like an inkjet printing device for label printing may be employed. In this case, an ultraviolet irradiation mechanism for curing the UV ink on the base material 3 through ultraviolet irradiation is provided inside the printing mechanism 220 (see Fig. 1) instead of the drying mechanism 225.

## Claims

1. A density adjustment method for adjusting a density of an image formed by ejecting color ink to a region where a processing liquid is ejected on a base material (3) in an inkjet printing device (1) including a color ink ejection head that ejects the color ink based on color ink density signal values and a processing liquid ejection head that ejects the processing liquid based on processing liquid density signal values, the density adjustment method comprising:
a color ink density correction value table creation step (S100) of creating a color ink density correction value table (71) representing a correspondence relationship between the color ink density signal values and densities to be appeared by ejecting the color ink to a region where the processing liquid is not ejected on the base material (3);
a processing liquid density correction value table creation step (S110) of creating a plurality of processing liquid density correction value tables (72) each representing a correspondence relationship between the processing liquid density signal values and densities to be appeared by ejecting the color ink to a region where the processing liquid is ejected on the base material (3), the plurality of processing liquid density correction value tables (72) respectively corresponding to a plurality of densities of the color ink;
a first printing step (S120) of forming a first color image on the base material (3) by ejecting the color ink from the color ink ejection head to a first predetermined region on the base material (3) based on a first set value as one of the color ink density signal values;
a first color image capturing step (S130) of capturing the first color image to acquire a density of the first color image;
a color ink density correction value calculation step (S140) of obtaining, based on a difference between the density acquired in the first color image capturing step (S130) and a density associated with the first set value in the color ink density correction value table (71), a color ink density correction value obtained by correcting the first set value;
a second printing step (S150) of forming a second color image on the base material (3) by ejecting the color ink from the color ink ejection head based on the color ink density correction value as one of the color ink density signal values after the processing liquid is ejected from the processing liquid ejection head to a second predetermined region on the base material (3) based on an initial signal value as one of the processing liquid density signal values;
a second color image capturing step (S160) of capturing the second color image to acquire a density of the second color image;
a processing liquid density correction value table selection step (S170) of selecting, from the plurality of processing liquid density correction value tables (72), a processing liquid density correction value table (72) corresponding to the density associated with the first set value in the color ink density correction value table (71); and
a processing liquid density correction value calculation step (S180) of obtaining, based on a difference between the density acquired in the second color image capturing step (S160) and a density associated with the initial signal value in the processing liquid density correction value table (72) selected in the processing liquid density correction value table selection step (S170), a processing liquid density correction value obtained by correcting the initial signal value.

2. The density adjustment method according to claim 1, wherein
the color ink density correction value calculation step (S140) includes:
a step of obtaining a color ink density signal value corresponding to the density acquired in the first color image capturing step (S130), as a first acquired density signal value, based on the color ink density correction value table (71);
a step of obtaining a difference between the first set value and the first acquired density signal value as a color ink density signal difference value; and
a step of obtaining the color ink density correction value by adding the color ink density signal difference value to the first set value.

3. The density adjustment method according to claim 1, wherein
the processing liquid density correction value calculation step (S180) includes:
a step of obtaining the processing liquid density signal value corresponding to the density acquired in the second color image capturing step (S160), as a second acquired density signal value, based on the processing liquid density correction value table (72) selected in the processing liquid density correction value table selection step (S170);
a step of obtaining a difference between the initial signal value and the second acquired density signal value as a processing liquid density signal difference value; and
a step of obtaining the processing liquid density correction value by adding the processing liquid density signal difference value to the initial signal value.

4. The density adjustment method according to claim 1, further comprising:
a third printing step (S210) of forming an inspection image including a plurality of density regions on the base material (3) by ejecting the color ink from the color ink ejection head based on a plurality of levels of color ink density signal values;
an inspection image capturing step (S220) of capturing the inspection image to acquire densities of the plurality of density regions constituting the inspection image; and
a shading correction value calculation step (S230) of obtaining, for each density region of the plurality of density regions, a shading correction value obtained by correcting a density signal value corresponding to the density region, based on a difference between the density acquired in the inspection image capturing step (S220) and a density associated with the density signal value corresponding to the density region in the color ink density correction value table (71).

5. The density adjustment method according to claim 1, wherein
in the first printing step (S120), an inspection image including a plurality of density regions respectively corresponding to a plurality of levels of color ink density signal values is printed on the base material (3),
the first color image corresponds to one of the plurality of density regions,
in the first color image capturing step (S130), densities of the plurality of density regions constituting the inspection image are acquired by capturing the inspection image including the first color image, the densities including the density of the first color image, and
the density adjustment method further includes a shading correction value calculation step (S545) of obtaining, for each density region of the plurality of density regions, a shading correction value obtained by correcting a density signal value corresponding to the density region, based on a difference between the density acquired in the first color image capturing step (S130) and a density associated with the density signal value corresponding to the density region in the color ink density correction value table (71).

6. The density adjustment method according to claim 1, wherein
the inkjet printing device (1) includes an imaging device (226) that captures an image formed on the base material (3),
in the first color image capturing step (S130), the imaging device (226) captures the first color image, and
in the second color image capturing step (S160), the imaging device (226) captures the second color image.

7. The density adjustment method according to any one of claims 1 to 6, wherein
the color ink ejection head includes a plurality of color ink ejection nozzles that eject the color ink,
the processing liquid ejection head includes a plurality of processing liquid ejection nozzles that eject the processing liquid and have one-to-one correspondence with the plurality of color ink ejection nozzles,
in the first color image capturing step (S130), the density of the first color image is acquired for each color ink ejection nozzle,
in the color ink density correction value calculation step (S140), the color ink density correction value is obtained for each color ink ejection nozzle,
in the second color image capturing step (S160), the density of the second color image is acquired for each processing liquid ejection nozzle, and
in the processing liquid concentration correction value calculation step (S180), the processing liquid density correction value is obtained for each processing liquid ejection nozzle.

8. The density adjustment method according to any one of claims 1 to 6, wherein
the inkjet printing device (1) includes a plurality of color ink ejection heads and a plurality of processing liquid ejection heads,
in the first color image capturing step (S130), the density of the first color image is acquired for each color ink ejection head,
in the color ink density correction value calculation step (S140), the color ink density correction value is obtained for each color ink ejection head,
in the second color image capturing step (S160), the density of the second color image is acquired for each processing liquid ejection head, and
in the processing liquid density correction value calculation step (S180), the processing liquid density correction value is obtained for each processing liquid ejection head.

9. A density adjustment method for adjusting a density of an image formed by ejecting color ink to a region where a processing liquid is ejected on a base material (3) in an inkjet printing device (1) including a color ink ejection head that ejects the color ink based on color ink density signal values and a processing liquid ejection head that ejects the processing liquid based on processing liquid density signal values, the density adjustment method comprising:
a processing liquid density correction value table creation step (S1000) of creating a plurality of processing liquid density correction value tables (72) each representing a correspondence relationship between the processing liquid density signal values and densities to be appeared by ejecting the color ink to a region where the processing liquid is ejected on the base material (3), the plurality of processing liquid density correction value tables (72) respectively corresponding to a plurality of densities of the color ink;
a printing step (S1100) of forming a first color image by ejecting the color ink from the color ink ejection head to a first predetermined region on the base material (3) based on a first set value as one of the color ink density signal value and forming a second color image by ejecting the color ink from the color ink ejection head based on the first set value as one of the color ink density signal values after the processing liquid is ejected from the processing liquid ejection head to a second predetermined region on the base material (3) based on an initial signal value as one of the processing liquid density signal values;
a first color image capturing step (S1200) of capturing the first color image to acquire a density of the first color image;
a second color image capturing step (S1300) of capturing the second color image to acquire a density of the second color image;
a processing liquid density correction value table selection step (S1400) of selecting, from the plurality of processing liquid density correction value tables (72), a processing liquid density correction value table (72) corresponding to the density acquired in the first color image capturing step (S1200); and
a processing liquid density correction value calculation step (S1500) of obtaining, based on a difference between the density acquired in the second color image capturing step (S1300) and a density associated with the initial signal value in the processing liquid density correction value table (72) selected in the processing liquid density correction value table selection step (S1400), a processing liquid density correction value obtained by correcting the initial signal value.

10. The density adjustment method according to claim 9, wherein
the processing liquid density correction value calculation step (S1500) includes:
a step of obtaining a processing liquid density signal value corresponding to the density acquired in the second color image capturing step (S1300), as a second acquired density signal value, based on the processing liquid density correction value table (72) selected in the processing liquid density correction value table selection step (S1400);
a step of obtaining a difference between the initial signal value and the second acquired density signal value as a processing liquid density signal difference value; and
a step of obtaining the processing liquid density correction value by adding the processing liquid density signal difference value to the initial signal value.

11. The density adjustment method according to claim 9, further comprising
a color ink density correction value table creation step (S100) of creating a color ink density correction value table (71) representing a correspondence relationship between the color ink density signal values and densities to be appeared by ejecting the color ink to a region where the processing liquid is not ejected on the base material (3);
a third printing step (S210) of forming an inspection image including a plurality of density regions on the base material (3) by ejecting the color ink from the color ink ejection head based on a plurality of levels of color ink density signal values;
an inspection image capturing step (S220) of capturing the inspection image to acquire densities of the plurality of density regions constituting the inspection image; and
a shading correction value calculation step (S230) of obtaining, for each density region of the plurality of density regions, a shading correction value obtained by correcting a density signal value corresponding to the density region, based on a difference between the density acquired in the inspection image capturing step (S220) and a density associated with the density signal value corresponding to the density region in the color ink density correction value table (71).

12. The density adjustment method according to claim 9, wherein
the inkjet printing device (1) includes an imaging device (226) that captures an image formed on the base material (3),
in the first color image capturing step (S1200), the imaging device (226) captures the first color image, and
in the second color image capturing step (S1300), the imaging device (226) captures the second color image.

13. The density adjustment method according to any one of claims 9 to 12, wherein
the color ink ejection head includes a plurality of color ink ejection nozzles that eject the color ink,
the processing liquid ejection head includes a plurality of processing liquid ejection nozzles that eject the processing liquid and have one-to-one correspondence with the plurality of color ink ejection nozzles,
in the first color image capturing step (S1200), the density of the first color image is acquired for each color ink ejection nozzle,
in the second color image capturing step (S1300), the density of the second color image is acquired for each processing liquid ejection nozzle,
in the processing liquid density correction value table selection step (S1400), the processing liquid density correction value table (72) corresponding to the density acquired in the first color image capturing step (S1200) is selected for each processing liquid ejection nozzle, and
in the processing liquid concentration correction value calculation step (S1500), the processing liquid density correction value is obtained for each processing liquid ejection nozzle.

14. The density adjustment method according to any one of claims 9 to 12, wherein
the inkjet printing device (1) includes a plurality of color ink ejection heads and a plurality of processing liquid ejection heads,
in the first color image capturing step (S1200), the density of the first color image is acquired for each color ink ejection head,
in the second color image capturing step (S1300), the density of the second color image is acquired for each processing liquid ejection head,
in the processing liquid density correction value table selection step (S1400), the processing liquid density correction value table (72) corresponding to the density acquired in the first color image capturing step (S1200) is selected for each processing liquid ejection head, and
in the processing liquid density correction value calculation step (S1500), the processing liquid density correction value is obtained for each processing liquid ejection head.
